# EUROPEAN PATENT APPLICATION

(11) **EP 3 943 979 A1**
(43) Date of publication of application: **26.01.2022**
(21) Application number: 21185122.5
(22) Date of filing: 12.07.2021
(51) Int. Cl.: G01S 7/497, G01S 17/86, G01S 17/89

(54) **INDOOR DEVICE LOCALIZATION**

(30) Priority: 20.07.2020 US 202063054073 P; 22.06.2021 US 202117354691
(71) Applicant: Faro Technologies, Inc., Lake Mary, FL 32746-6204 (US)
(72) Inventor: SCHMITZ, Evelyn, 70825 Korntal-Münchingen (DE); WOHLFELD, Denis, 70825 Korntal-Münchingen (DE)
(74) Representative: McNamara, Kathryn

(57) **Abstract**

An example system for measuring three-dimensional (3D) coordinate values of an environment is provided. The system includes a mobile scanning platform configured to measure coordinates in the environment. The mobile scanning platform has one or more radio antennas. The system further includes one or more processors operably coupled to the mobile scanning platform, the one or more processors being responsive to nontransitory executable instructions for performing a method. The method includes registering the measured coordinates to generate a point cloud. Registering includes triangulating a position of the mobile scanning platform based at least in part on data received from the one or more radio antennas. Registering further includes adjusting an orientation or position of one or more of the measured coordinates to align with a layout of the environment.

## Description

### CROSS-REFERENCE TO RELATED APPLICATIONS

This application claims the benefit of U.S. Patent Application No. 63/054,073 filed July 20, 2020, the disclosure of which is incorporated herein by reference in its entirety.

### BACKGROUND

The subject matter disclosed herein relates to processing devices and, in particular, to indoor device localization.

The automated three-dimensional (3D) scanning of an environment is desirable as a number of scans may be performed in order to obtain a complete scan of the area. 3D coordinate scanners include time-of-flight (TOF) coordinate measurement devices. A TOF laser scanner is a scanner in which the distance to a target point is determined based on the speed of light in air between the scanner and a target point. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., an azimuth and a zenith angle), and optionally a gray-scale value. This raw scan data is collected, stored and sent to a processor or processors to generate a 3D image representing the scanned area or object.

It should be appreciated that where an object (e.g. a wall, a column, or a desk) blocks the beam of light, that object will be measured but any objects or surfaces on the opposite side will not be scanned since they are in the shadow of the object relative to the scanner. Therefore, to obtain a more complete scan of the environment, the TOF scanner is moved to different locations and separate scans are performed. Subsequent to the performing of the scans, the 3D coordinate data (i.e., the point cloud) from each of the individual scans are registered to each other and combined to form a 3D image or model of the environment.

Some existing measurement systems have been mounted to a movable structure, such as a cart, and moved on a continuous basis through an environment such as a building to generate a digital representation of the environment. However, these provide generally lower data quality than stationary scans. These systems tend to be more complex and require specialized personnel to perform the scan. Further, the scanning equipment including the movable structure may be bulky, which could further delay the scanning process in time sensitive situations, such as a crime or accident scene investigation.

Further, even though the measurement system is mounted to a movable cart, the cart is stopped at scan locations so that the measurements can be performed. This further increases the time to scan an environment.

Accordingly, while existing scanners are suitable for their intended purposes, what is needed is a system for having certain features of embodiments of the present invention.

### BRIEF DESCRIPTION

According to one aspect of the disclosure, a system for measuring three-dimensional (3D) coordinate values of an environment is provided. The system includes a mobile scanning platform configured to measure coordinates in the environment, the mobile scanning platform having one or more radio antennas. The system further includes one or more processors operably coupled to the mobile scanning platform, the one or more processors being responsive to nontransitory executable instructions for performing a method. The method includes registering the measured coordinates to generate a point cloud. The registering includes triangulating a position of the mobile scanning platform based at least in part on data received from the one or more radio antennas and adjusting an orientation or position of one or more of the measured coordinates to align with a layout of the environment.

In addition to one or more of the features described herein, or as an alternative, further embodiments of the system may include that the mobile scanning platform includes a 2D scanner coupled to the mobile scanning platform. The 2D scanner includes a light source, an image sensor and a controller, the light source steering a beam of light within a first plane to illuminate object points in the environment. The image sensor is arranged to receive light reflected from the object points. The controller is operable to determine a distance value to at least one of the object points, the 2D scanner measuring an angle and the distance value. The mobile scanning platform further includes a 3D scanner coupled to the mobile scanning platform, the 3D scanner operable to selectively measure 3D coordinates of surfaces in the environment.

In addition to one or more of the features described herein, or as an alternative, further embodiments of the system may include that the method includes generating a 2D map based at least in part on the measured angle and the distance value. The registering includes registering the measured 3D coordinates to data of the 2D map to generate the point cloud.

In addition to one or more of the features described herein, or as an alternative, further embodiments of the system may include that adjusting the orientation or position of the scan is based at least in part on a user input.

In addition to one or more of the features described herein, or as an alternative, further embodiments of the system may include that adjusting the orientation or position of the scan is based at least in part on an automatic algorithmic adjustment.

In addition to one or more of the features described herein, or as an alternative, further embodiments of the system may include that the automatic algorithmic adjustment includes rotating the point cloud based on projecting lines and planes in 2D and adjusting the point clouds to align with the projected lines and planes.

In addition to one or more of the features described herein, or as an alternative, further embodiments of the system may include that the one or more radio antennas are 5G radio antennas.

In addition to one or more of the features described herein, or as an alternative, further embodiments of the system may include that the environment is an indoor environment, and that the one or more radio antennas are indoor radio antennas located within the environment.

In addition to one or more of the features described herein, or as an alternative, further embodiments of the system may include that triangulating the position is performed using received signal strength indicators.

In addition to one or more of the features described herein, or as an alternative, further embodiments of the system may include that the position determined by triangulation is an absolute position.

In addition to one or more of the features described herein, or as an alternative, further embodiments of the system may include that the position determined by triangulation is a local position relative to the environment.

In addition to one or more of the features described herein, or as an alternative, further embodiments of the system may include that the method further includes correcting for accumulated error in the point cloud.

In addition to one or more of the features described herein, or as an alternative, further embodiments of the system may include that correcting for the accumulated error in the point cloud includes determining a starting position of the mobile scanning platform, tracking the mobile scanning platform as it moves along a path, and correcting for the accumulated error in the point cloud based at least in part on the starting position and the tracking.

In addition to one or more of the features described herein, or as an alternative, further embodiments of the system may include that the starting position is an absolute position.

In addition to one or more of the features described herein, or as an alternative, further embodiments of the system may include that the starting position is a local position relative to the environment.

According to another aspect of the disclosure, a method for measuring three-dimensional (3D) coordinate values of an environment is provided. The method includes moving a mobile scanning platform through an environment, the mobile scanning platform being configured to measure coordinates in the environment. The method further includes generating a point cloud from the measured coordinates. The method further includes registering the point cloud. The registering includes triangulating a position of the mobile scanning platform based at least in part on data received from one or more radio antennas, the one or more radio antennas being associated with the mobile scanning platform. The registering further includes adjusting an orientation or position of one or more measured points in the point cloud to align with a layout of the environment. The registering further includes correcting for accumulated error in the point cloud.

In addition to one or more of the features described herein, or as an alternative, further embodiments of the mobile platform further includes a plurality of wheels, a 2D scanner and a 3D scanner, the 2D scanner having a light source, an image sensor and a controller, the light source steering a beam of light within a first plane to illuminate object points in the environment, the image sensor being arranged to receive light reflected from the object points, the controller being operable to determine a distance value to at least one of the object points, the 2D scanner measuring an angle and the distance value. The method further includes, as the mobile scanning platform is moving, causing the 2D scanner to generate a 2D map of the environment, the 2D map being based at least in part on the angle and the distance value. The method further includes, as the mobile scanning platform is moving, causing the 3D scanner to operate in compound mode, the 3D scanner to measure a plurality of 3D coordinate values. The registering includes registering the plurality of 3D coordinate values based at least in part on the 2D map to generate the point cloud.

In addition to one or more of the features described herein, or as an alternative, further embodiments of the method may include that adjusting the orientation of the scan is based at least in part on a user input.

In addition to one or more of the features described herein, or as an alternative, further embodiments of the method may include that adjusting the orientation of the scan is based at least in part on an automatic algorithmic adjustment.

In addition to one or more of the features described herein, or as an alternative, further embodiments of the method may include that the automatic algorithmic adjustment includes rotating the point cloud based on projecting lines and planes in 2D and adjusting the point clouds to align with the projected lines and planes.

In addition to one or more of the features described herein, or as an alternative, further embodiments of the method may include that the environment is an indoor environment, and that the one or more radio antennas are indoor radio antennas located within the environment.

In addition to one or more of the features described herein, or as an alternative, further embodiments of the method may include that the position determined by triangulation is an absolute position.

In addition to one or more of the features described herein, or as an alternative, further embodiments of the method may include that the position determined by triangulation is a local position relative to the environment.

In addition to one or more of the features described herein, or as an alternative, further embodiments of the method may include that correcting for the accumulated error in the point cloud includes determining a starting position of the mobile scanning platform, tracking the mobile scanning platform as it moves along a path, and correcting for accumulated error in the point cloud based at least in part on the starting position and the tracking.

In addition to one or more of the features described herein, or as an alternative, further embodiments of the method may include that the starting position is an absolute position.

In addition to one or more of the features described herein, or as an alternative, further embodiments of the method may include that the starting position is a local position relative to the environment.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 depicts an example of device localization according to one or more embodiments described herein;
FIG. 2A depicts a representation a layout of an environment according to one or more embodiments described herein;
FIG. 2B depicts a representation a scan acquisition superimposed on the layout of the environment of FIG. 2A according to one or more embodiments described herein;
FIG. 2C depicts a representation of an adjusted scan acquisition superimposed on the layout of the environment of FIG. 2A according to one or more embodiments described herein;
FIG. 3 depicts a flow diagram of a method of scanning an environment using the mobile scanning platform according to one or more embodiments described herein;
FIG. 4 depicts a plan view of a two-dimensional (2D) map generated during the method of FIG. 3 according to one or more embodiments described herein; and
FIG. 5 depicts a point cloud image of a portion of the environment acquired using the method of FIG. 3 according to one or more embodiments described herein;
FIG. 6 depicts a block diagram of a workflow for mobile device localization according to one or more embodiments described herein;
FIG. 7 depicts a block diagram of a workflow for correcting drift of a point cloud according to one or more embodiments described herein;
FIG. 8 depicts a diagram of correcting drift of a point cloud according to one or more embodiments described herein;
FIG. 9 depicts a flow diagram of a method for measuring three-dimensional (3D) coordinate values of an environment according to one or more embodiments described herein;
FIG. 10 depicts a block diagram of a processing system for implementing the presently described techniques according to one or more embodiments described herein.

The detailed description explains embodiments of the disclosure, together with advantages and features, by way of example with reference to the drawings.

### DETAILED DESCRIPTION

Embodiments of the present disclosure provide for a system and method for using a radio communication-based network for localization of a device, such as a two-dimensional (2D) a three-dimensional (3D) scanner, or a combination of the foregoing.

Terrestrial laser scanning is the process by which terrain, landscape, and/or environmental mapping occurs. Terrestrial laser scanning is used for scanning environments, including buildings and other structures, to model the environment. For example, an as-built model of a building, a layout of cubicles within a space, and the like can be generated using terrestrial laser scanning. Registration of a terrestrial laser scan as a process is time-consuming, cost-intensive, and often unreliable. Even though there exist algorithms for automatic registration, the processing step sometimes fails and requires a trained human to control and/or change the scan position in a coherent point cloud. Accordingly, it is desirable to further automate registration processing.

Radio communication-based networks, such as 4G, 5G, Wi-Fi, and the like can be used to determine a location of a device, such as a scanner, that is equipped with a radio-communication-based transponder. For example, 5G can be used to identify the positioning of unmanned aerial vehicle or automated guided vehicle systems, the tracking of goods in intralogistics processes, or the localization for audiovisual / virtual reality applications. These applications are categorized as UE-Assisted and UE-based. With UE-Assisted, the radio communication-based network and an external application executing on a computer processing system in communication with the scanner receive a position of the scanner to capture the location of an object or environment being scanned. In UE-based, the scanner calculates its own position for navigation and guidance.

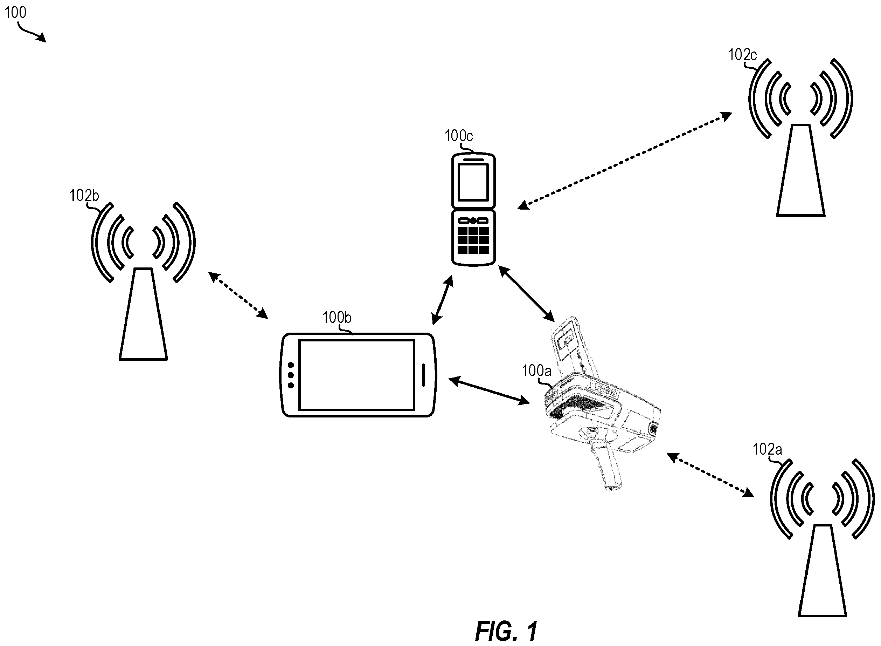

Time-consuming, cost-intensive, and unreliable scanner registration can be improved by using radio communication-based networks to localize the scanner. As an example, 5G uses uplink and downlink signals to determine the position of individual devices, such as a scanner, and to determine their position with respect to radio antennas serving as anchor points. Such an example is depicted in FIG. 1, in which devices, which can include a scanner 100a, a tablet computer 100b, and/or a smartphone 100c (collectively referred to herein as devices 100) are shown in communication with one another and with radio antennas 102a, 102b, 102c (collectively referred to as radio antennas 102). The devices 100 monitor the distance to the radio antennas 102 in their vicinity, measuring the signal strength and the approximate propagation time to the devices 100. One such example of distance determination can utilize received signal strength indicators (RSSI), which provides a measure of power level that a radio communication device (e.g., one or more of the devices 100) is receiving from an antenna (e.g., one or more of the radio antennas 102). By combining these observations, the position of a device, such as the scanner 100a, can be calculated. The approach can be transferred to scanner devices, for example, using the UE-based approach. Examples for terrestrial and mobile scanning workflows are described herein as terrestrial laser scanning and mobile laser scanning.

Note that the scanner 100a may be a 2D scanner, such as that described in commonly owned United States Patent Publication 2018/0285482 filed September 25, 2017, the contents of which are incorporated herein by reference. In another embodiment, the scanner 100a may be an area or structured light type 3D scanner, such as that described in commonly owned United States Patent 9,693,040 filed September 3, 2015, the contents of which are incorporated herein by reference. In still another embodiment, the scanner 100a may be a 3D TOF scanner, such as that described in United States Patent 9,739,886 filed December 3, 2014, the contents of which are incorporated herein by reference. It should be appreciated that while embodiments herein may describe the scanner with respect to a particular type of coordinate measurement device, this is for example purposes and the claims should not be so limited. In other embodiments, the systems and methods described herein may be used with any known coordinate measurement device, such as but not limited to articulated arm coordinate measurement machines, laser trackers, structured light scanners, uncoded structured light scanners, line scanners, laser line probes, flying spot scanners, phase type time of flight scanners, or systems incorporating a combination of the foregoing.

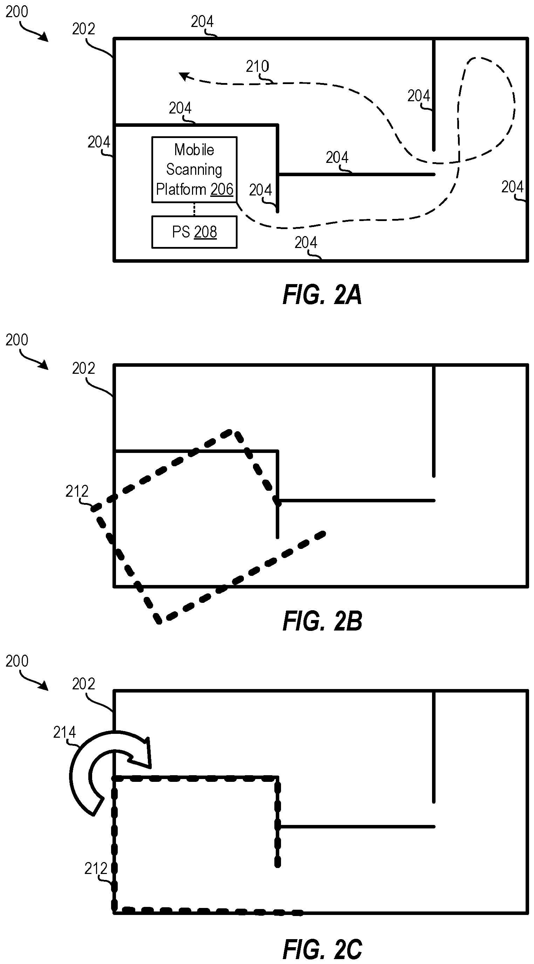

With regard to terrestrial laser scanning, FIG. 2A depicts a representation of a layout 200 of an environment 202. The environment 202 includes walls 204 and/or other similar structures within or making up the environment 202. A mobile scanning platform 206 scans the environment 202 to identify the walls 204 and/or other similar structures within or making up the environment 202. The mobile scanning platform 206 also scans the environment 202 to identify any obstacles (not shown) within the environment 202.

An example of such a mobile scanning platform 206 is described in commonly owned United States Patent Application Serial Number 16/567,575, the contents of which are incorporated by reference herein. The mobile scanning platform 206 can include a 2D scanner and/or a 3D scanner. In some examples, the mobile scanning platform 206 includes scanners configured to acquire 2D and 3D scan data. It should be appreciated that the mobile scanning platform may also be a device sized and weighted to be carried by a single person.

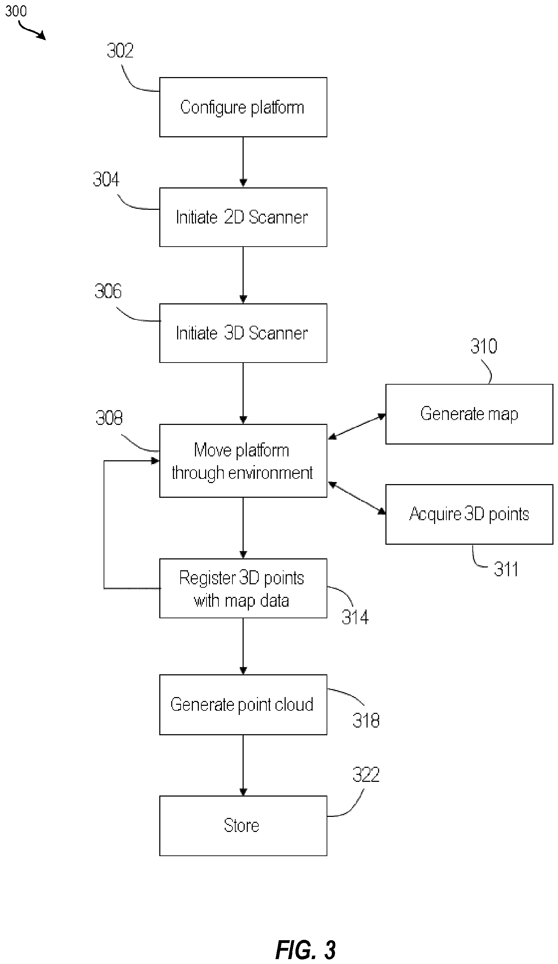

The mobile scanning platform 206 moves through the environment 202 (shown by path 210) capturing data in the form of 3D points that can be registered with 2D map data to generate a point cloud representative of the environment 202. FIG. 3 depicts a method 300 for scanning an environment (e.g., the environment 202) with a mobile scanning platform 206 having a scanner(s) attached thereto or integrated therein. The method 300 starts in block 302 where the mobile scanning platform 206 is configured. In an embodiment, the configuring may include attaching a 2D scanner to an arm or holder of the mobile scanning platform 206 and a 3D measurement device a post of the mobile scanning platform 206. The configuring may include determining a path (e.g., the path 210 of FIG. 2A) for the mobile scanning platform 206 to follow and defining stationary scan locations (if desired). In an embodiment, the path 210 may be determined using the system and method described in commonly owned United States Patent Application Serial Number 16/154,240, the contents of which are incorporated by reference herein. In some examples, once the path 210 is defined, a 2D scanner and/or a 3D scanner may be coupled to the mobile scanning platform 206. It should be appreciated that in some embodiments, the mobile scanning platform may be remotely controlled by an operator, such as using the processing system (PS) 208 shown in FIG. 2A and the step of defining the path 210 may not be performed.

Once the mobile scanning platform 206 is configured, the method 300 initiates the mobile scanning platform 206, which can include both 2D and 3D scanners or scanning capabilities, at blocks 306, 308. It should be appreciated that when operation of a 2D scanner is initiated, the 2D scanner starts to generate a 2D map of the environment as described in commonly owned United States Patent Application Serial Number 16/154,240. Similarly, when operation of the 3D scanner (i.e., a 3D measurement device) is initiated, the coordinates of 3D points in the environment are acquired in a volume about the 3D scanner.

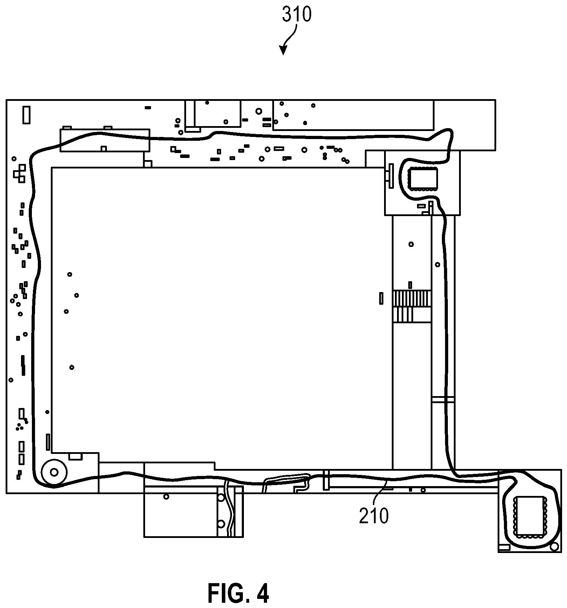

The method 300 then proceeds to block 308 where the mobile scanning platform 206 is moved through the environment along the path 210. As the mobile scanning platform 206 is moved along the path 210, the mobile scanning platform 206, including the 2D and/or 3D scanner(s), continues to operate. This results in the generation of both a 2D map 310 as shown in FIG. 4 and the acquisition of 3D points 311. In an embodiment, as the 2D map is generated, the location or path 210 of the mobile scanning platform 206 is indicated on the 2D map.

In an embodiment, the mobile scanning platform 206 and/or the processing system 208 may include a user interface that provides feedback to the operator during the performing of the scan. In an embodiment, a quality attribute (e.g. scan density) of the scanning process may be determined during the scan. When the quality attribute crosses a threshold (e.g. scan density too low), the user interface may provide feedback to the operator. In an embodiment, the feedback is for the operator to perform a stationary scan with the 3D scanner. In some embodiments, the user interface enables the operation to provide information, such as orientation of the mobile scanning platform 206 and/or orientation of one or more of the 2D and/or 3D scanner(s).

The method 300 then proceeds to block 314 where the acquired 3D coordinate points are registered into a common frame of reference. It should be appreciated that since the mobile scanning platform 206 is moving throughout the environment 202 while the mobile scanning platform 206 is acquiring data, the local frame of reference of the mobile scanning platform 206 is also changing. Using the position and pose data, the frame of reference of the acquired 3D coordinate points may be registered into a global frame of reference. In an embodiment, the registration is performed as the mobile scanning platform 206 is moved through the environment. In another embodiment, the registration is done when the scanning of the environment is completed.

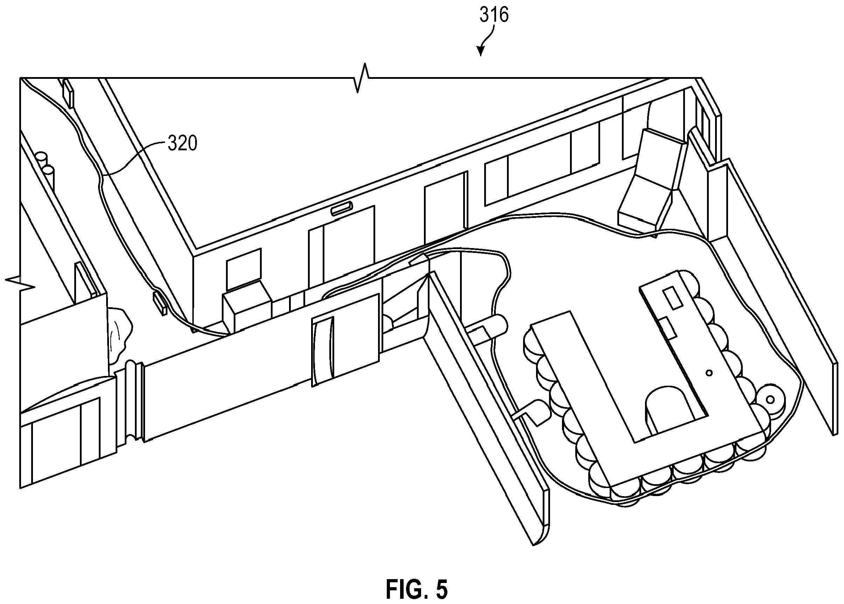

The registration of the 3D coordinate points allows the generation of a three-dimensional point cloud 316 of FIG. 5 in block 318 of FIG. 3. In an embodiment, a representation of the path 320 of the mobile scanning platform 206 is shown in the point cloud 316. In some embodiments, the point cloud 316 is generated and displayed to the user as the mobile scanning platform 206 moves through the environment being scanned. In these embodiments, blocks 308, 314, 318 may loop continuously until the scanning is completed. With the scan complete, the method 300 ends in block 322 where the point cloud 316 and 2D map 310 are stored in memory of a controller or processor system (e.g., the processing system 208 of FIG. 2A).

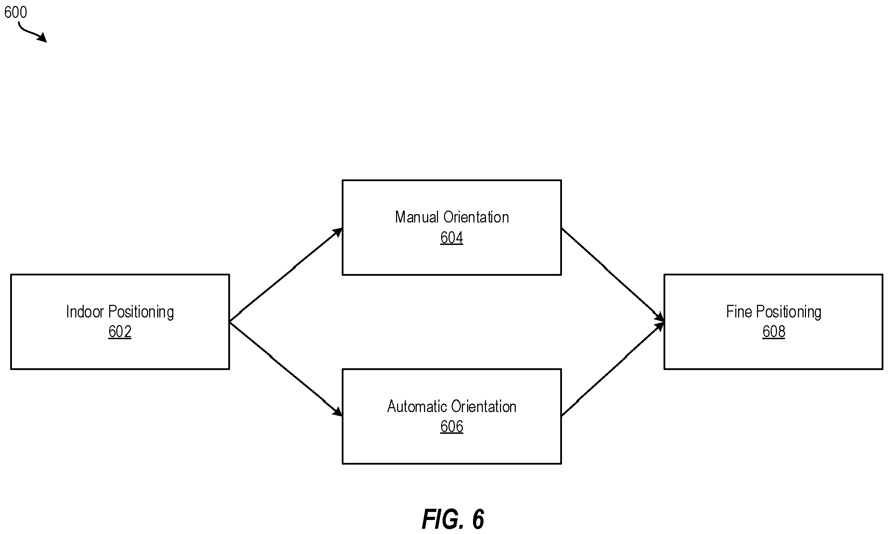

With continued reference to FIG. 2A, as the mobile scanning platform 206 moves throughout the environment 202, and the 2D and 3D data are acquired, it may be useful to determine a location and orientation of the mobile scanning platform 206, such as for performing the registration of the 3D coordinate points as described herein to generate the point cloud 316. Examples for terrestrial and mobile scanning workflows are described herein as terrestrial laser scanning and mobile laser scanning. An example of terrestrial laser scanning is now described with reference to FIGS. 2A, 2B, 2C, and 6.

An operator of the mobile scanning platform 206 (referred to as an operator or surveyor) takes a tablet computer 100b (e.g., the processing system 208) into the environment 202 to be scanned. The processing system 208 is communicatively coupled to the mobile scanning platform 206 using any suitable wired and/or wireless communication interface such as WiFi. In some embodiments, the processing system 208 may be integral with the mobile scanning platform 206. In some examples, a layout map of the environment 202 can be loaded to software executing on the processing system 208 so that a first scan position is marked (block 602 of FIG. 6). In some examples, as shown in block 604 of FIG. 6, the surveyor marks the first scan position manually on this map. However, in another example, as shown in block 606 of FIG. 6, such as if a reference system is available and the layout map is registered in the suitable coordinate system, the first scan position is marked automatically such as using 5G positioning determination.

Since the rotation of the scan is not given by the 5G localization (for example), the operator can orientate the scan manually (block 604) on the processing system 208 considering the layout. Once a scan at one scan position is complete, the mobile scanning platform 206 moves on to the next scan position along the path 210. Again, the position of the mobile scanning platform 206 is estimated (blocks 604, 606) and the operator adapts the orientation after the data acquisition is finished.

In some examples, an algorithm can be implemented using a top-view registration method to align the roughly positioned scans at block 606. Dominant lines and planes are extracted and registered compared to the prior scan positions and/or the layout map. The coordinates of the laser scanner position in a reference system provide a basic location estimate as described herein, such as using 5G-based device localization, so estimated registration later is unnecessary. The fine registration positioning at block 608, which can be cloud-to-cloud registration for example, may be applied if a 5G signal in the scanning environment is not good enough. Still, the rough registration, performed automatically (block 606) or manually (block 604), is not needed anymore. This approach not only has the advantage of providing an in-field rough registration of scans, it also helps the surveyor to navigate through the building and make sure that all desired areas are documented/scanned.

An example of a method for capturing, locating, and orienting a scan is now provided. As described with respect to FIG. 2A, a scan (e.g., a scan 212 of FIG. 2B) is captured of the environment 202. When captured, the mobile scanning platform 206 (either individually or in conjunction with the processing system 208) uses device localization as described herein, such as 5G-based device localization, to determine position information of the mobile scanning platform 206 (see, e.g., FIG. 6).

However, as shown in FIG. 2B the scan 212 may not align with the layout of the environment 202. The layout of the environment can be, for example, a computer-aided design (CAD) layout of the environment 202 loaded into software executing on the processing system 208 such as the tablet computer 100b or other suitable computer processing system. In some examples, such as where the scan 212 does not align with the layout of the environment 202, the scan 212 is aligned with the layout. As one such example, the surveyor of the processing system 208 enters alignment information to rotate the acquired point cloud in a top-view approach as described herein). In another example, the processing system 208 performs algorithmic adjustment. This is performed by automatically rotating the acquired point cloud by projecting lines and planes in 2D and adjusting point clouds automatically to align with the projected lines and planes. FIG. 2C depicts the scan 212 rotated (see arrow 214) such that the scan 212 is aligned with the environment 202.

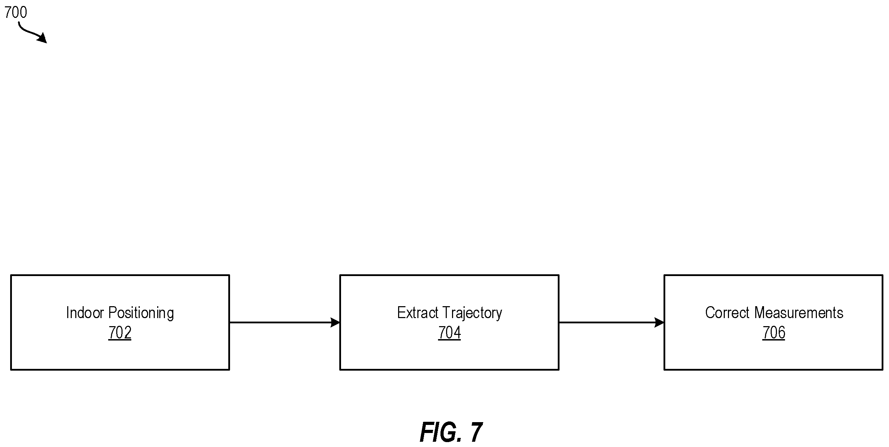

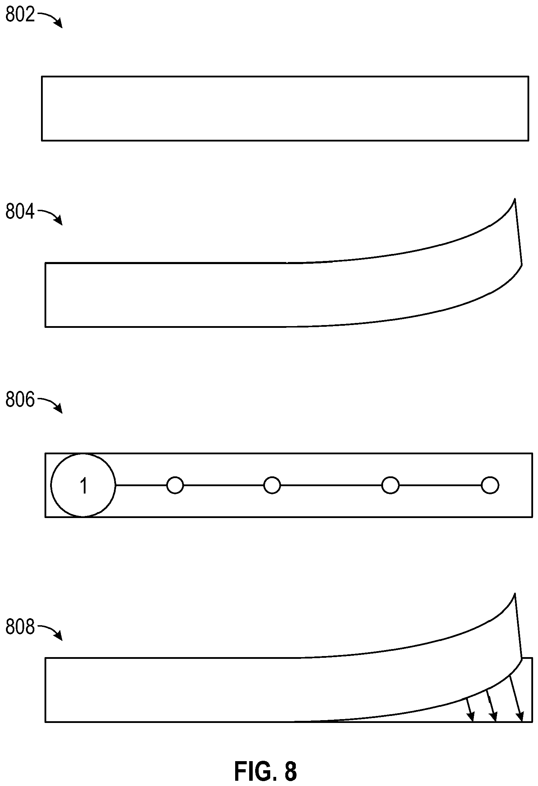

Turning now to FIGS. 7 and 8, an example of mobile laser scanning with error correction is provided. Using the location of the laser scanner (determined using radio communication-based networks to localize the scanner as described herein), drift in point clouds can be corrected. This can be accomplished because the trajectory can be calculated based on the tracking of the mobile scanning platform 206 on the processing system 208 either manually or automatically (such as using an integrated reference system). The start position of the mobile scanning platform 206 can either be marked manually, such as via the processing system 208 by a surveyor, or automatically using radio communication-based networks to localize the scanner as described herein. The absolute measurements of the position of the mobile scanning platform 206 can be used to correct errors, sometimes referred to as drift, in the data during data acquisition, for example. A combination of the estimated position of the mobile scanning platform 206 and a correction based on landmarks, such as walls or floors, provides a high-quality indoor mobile mapping system.

As shown in FIG. 7, indoor positioning is determined at block 702 using radio communication-based networks to localize the scanner as described herein. Although global positioning system (GPS) has conventionally been used for device localization, GPS is not available indoors. The present techniques utilize radio communication-based networks such as 5G to perform triangulation to localize the indoor position of a mobile scanning platform.

In some examples, the radio communication-based networks utilize radio antennas outside of the environment, while in some examples, the radio antennas are located inside of the environment. This enables both global/absolute positioning as well as local/relative positioning to be performed. Global/absolute positioning is positioning that is fixed relative to other objects globally while local/relative positioning is positioning that is fixed relative to the environment, not to other objects globally.

At block 704, a trajectory is extracted based on tracking of the mobile scanning platform 206. For example, the mobile scanning platform 206 can be tracked using radio communication-based networks such as 5G. Such tracking can be based on global/absolute positioning or local/relative positioning. Using the tracking information, the measurements can be corrected at block 706. FIG. 8 depicts an example of such correction. In particular, an actual floor 802 is shown along with a scanned floor 804 depicted from mobile scan data captured, for example, by the mobile scanning platform 206. As can be seen, the data of the actual floor 802 varies towards the right hand portion of the scanned floor 804 as a result of drift in the point clouds. To correct this, as described in FIG. 7, a start position is determined (806), such as using radio communication-based network localization (e.g., 5G triangulation) or manually. This provides an exact (either local or global) position of the mobile scanning platform 206 at the start of the scan. The mobile scanning platform 206 is then tracked as it moves (e.g., along the path 210) so that its position (either local or global) is continuously determined while the mobile scanning platform 206 moves. Using the starting position and the tracking position information, the accumulated errors or drift in the point cloud can be corrected as shown (808). It should be appreciated that in some embodiments, the position of the mobile scanning platform 206 may be determined on a periodic or aperiodic basis rather than continuously.

In some embodiments a device pool list (e.g., a file including the serial number of the device and the exact location of scanning devices that are used in metrology in production lines) can be automatically generated. This device localization is beneficial when many such devices are implemented.

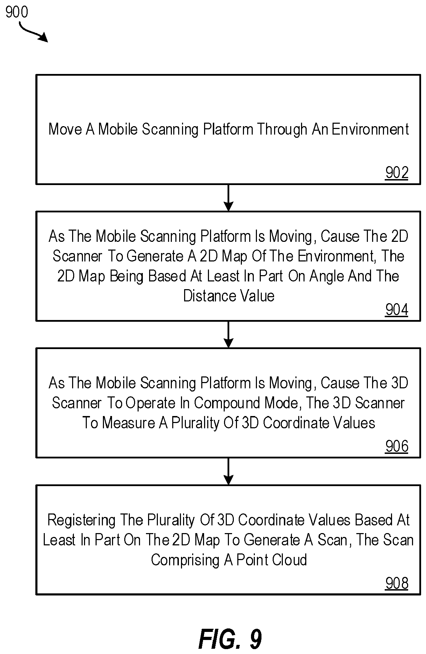

FIG. 9 depicts a flow diagram of a method 900 for measuring 3D coordinate values of an environment 202 according to one or more embodiments described herein. The method can be implemented, for example, by the mobile scanning platform 206 and/or the processing system 208, or any suitable device(s).

At block 902, the mobile scanning platform 206 moves through an environment. The mobile scanning platform 206 includes a plurality of wheels, a 2D scanner, and a 3D scanner. The 2D scanner includes a light source, an image sensor and a controller (which can be the processing system 208 in some examples). The light source steers a beam of light within a first plane to illuminate object points in the environment. The image sensor is arranged to receive light reflected from the object points, and the controller is operable to determine a distance value to at least one of the object points. The 2D scanner measures an angle and a distance value, and the 3D scanner is configured to operate in a compound mode. The 3D scanner also includes a color camera.

At block 904, as the mobile scanning platform is moving, the processing system 208 causes the 2D scanner to generate a 2D map of the environment. The 2D map is based at least in part on angle and the distance value. At block 906, as the mobile scanning platform 206 is moving, the processing system 208 causes the 3D scanner to operate in compound mode and to measure a plurality of 3D coordinate values.

At block 908, the processing system 208 registers the plurality of 3D coordinate values based at least in part on the 2D map to generate a scan, which includes a point cloud. The registering includes triangulating a position of the mobile scanning platform 206 based at least in part on data received from radio antennas. The registering further includes adjusting an orientation of the scan to align with a layout of the environment. The registering further includes correcting for drift in the point cloud.

Additional processes also may be included, and it should be understood that the process depicted in FIG. 9 represents an illustration, and that other processes may be added or existing processes may be removed, modified, or rearranged without departing from the scope of the present disclosure.

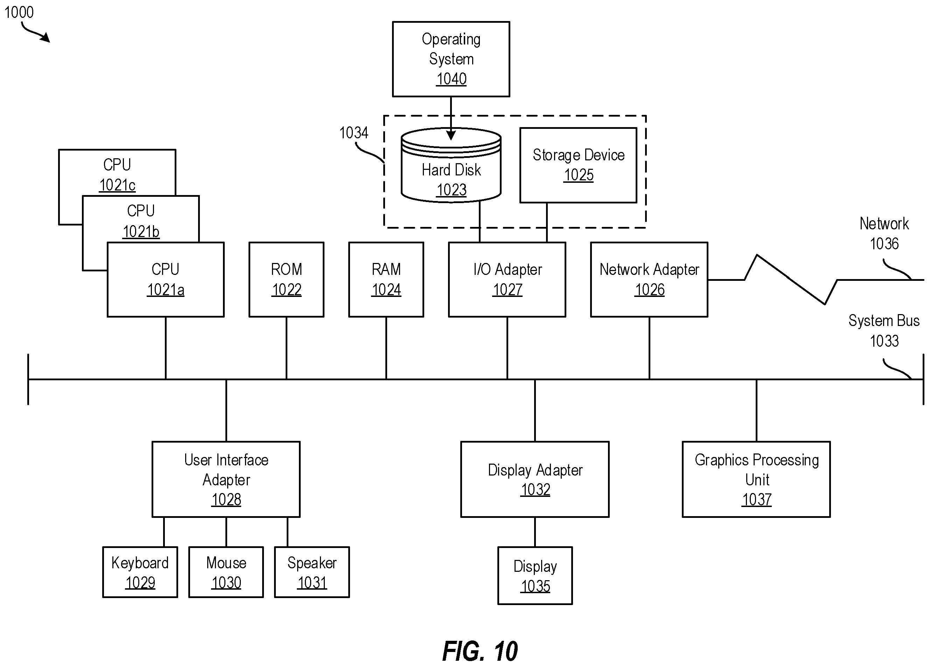

It is understood that one or more embodiments described herein is capable of being implemented in conjunction with any other type of computing environment now known or later developed. For example, FIG. 10 depicts a block diagram of a processing system 1000 for implementing the techniques described herein. In examples, processing system 1000 has one or more central processing units ("processors" or "processing resources") 1021a, 1021b, 1021c, etc. (collectively or generically referred to as processor(s) 1021 and/or as processing device(s)). In aspects of the present disclosure, each processor 1021 can include a reduced instruction set computer (RISC) microprocessor. Processors 1021 are coupled to system memory (e.g., random access memory (RAM) 1024) and various other components via a system bus 1033. Read only memory (ROM) 1022 is coupled to system bus 1033 and may include a basic input/output system (BIOS), which controls certain basic functions of processing system 1000.

Further depicted are an input/output (I/O) adapter 1027 and a network adapter 1026 coupled to system bus 1033. I/O adapter 1027 may be a small computer system interface (SCSI) adapter that communicates with a hard disk 1023 and/or a storage device 1025 or any other similar component. I/O adapter 1027, hard disk 1023, and storage device 1025 are collectively referred to herein as mass storage 1034. Operating system 1040 for execution on processing system 1000 may be stored in mass storage 1034. The network adapter 1026 interconnects system bus 1033 with an outside network 1036 enabling processing system 1000 to communicate with other such systems.

A display (e.g., a display monitor) 1035 is connected to system bus 1033 by display adapter 1032, which may include a graphics adapter to improve the performance of graphics intensive applications and a video controller. In one aspect of the present disclosure, adapters 1026, 1027, and/or 1032 may be connected to one or more I/O busses that are connected to system bus 1033 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 1033 via user interface adapter 1028 and display adapter 1032. A keyboard 1029, mouse 1030, and speaker 1031 may be interconnected to system bus 1033 via user interface adapter 1028, which may include, for example, a Super I/O chip integrating multiple device adapters into a single integrated circuit.

In some aspects of the present disclosure, processing system 1000 includes a graphics processing unit 1037. Graphics processing unit 1037 is a specialized electronic circuit designed to manipulate and alter memory to accelerate the creation of images in a frame buffer intended for output to a display. In general, graphics processing unit 1037 is very efficient at manipulating computer graphics and image processing, and has a highly parallel structure that makes it more effective than general-purpose CPUs for algorithms where processing of large blocks of data is done in parallel.

Thus, as configured herein, processing system 1000 includes processing capability in the form of processors 1021, storage capability including system memory (e.g., RAM 1024), and mass storage 1034, input means such as keyboard 1029 and mouse 1030, and output capability including speaker 1031 and display 1035. In some aspects of the present disclosure, a portion of system memory (e.g., RAM 1024) and mass storage 1034 collectively store the operating system 1040 such as the AIX^{®} operating system from IBM Corporation to coordinate the functions of the various components shown in processing system 1000.

The term "about" is intended to include the degree of error associated with measurement of the particular quantity based upon the equipment available at the time of filing the application.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description but is only limited by the scope of the appended claims.

## Claims

1. A system for measuring three-dimensional (3D) coordinate values of an environment, the system comprising:
a mobile scanning platform configured to measure coordinates in the environment, the mobile scanning platform having one or more radio antennas; and
one or more processors operably coupled to the mobile scanning platform, the one or more processors being responsive to nontransitory executable instructions for performing a method comprising:
registering the measured coordinates to generate a point cloud, wherein the registering comprises:
triangulating a position of the mobile scanning platform based at least in part on data received from the one or more radio antennas; and
adjusting an orientation or position of one or more of the measured coordinates to align with a layout of the environment.

2. The system of claim 1, wherein the mobile scanning platform comprises:
a 2D scanner coupled to the mobile scanning platform, the 2D scanner comprising a light source, an image sensor and a controller, the light source steering a beam of light within a first plane to illuminate object points in the environment, the image sensor is arranged to receive light reflected from the object points, the controller being operable to determine a distance value to at least one of the object points, the 2D scanner measuring an angle and the distance value; and
a 3D scanner coupled to the mobile scanning platform, the 3D scanner operable to selectively measure 3D coordinates of surfaces in the environment.

3. The system of claim 2, wherein the method further comprises:
generating a 2D map based at least in part on the measured angle and the distance value; and
wherein the registering includes registering the measured 3D coordinates to data of the 2D map to generate the point cloud.

4. The system of claim 1, wherein adjusting the orientation or position of the scan is based at least in part on a user input.

5. The system of claim 1, wherein adjusting the orientation or position of the scan is based at least in part on an automatic algorithmic adjustment.

6. The system of claim 5, wherein the automatic algorithmic adjustment comprising rotating the point cloud based on projecting lines and planes in 2D and adjusting the point clouds to align with the projected lines and planes.

7. The system of claim 1, wherein the one or more radio antennas are 5G radio antennas.

8. The system of claim 1, wherein the environment is an indoor environment, and wherein the one or more radio antennas are indoor radio antennas located within the environment.

9. The system of claim 1, wherein triangulating the position is performed using received signal strength indicators.

10. The system of claim 1, wherein the position determined by triangulation is an absolute position.

11. The system of claim 1, wherein the position determined by triangulation is a local position relative to the environment.

12. The system of claim 1, wherein the method further comprises correcting for accumulated error in the point cloud.

13. The system of claim 12, wherein correcting for the accumulated error in the point cloud comprises:
determining a starting position of the mobile scanning platform;
tracking the mobile scanning platform as it moves along a path; and
correcting for the accumulated error in the point cloud based at least in part on the starting position and the tracking.

14. The system of claim 13, wherein the starting position is one of an absolute position or a local position relative to the environment.

15. A method for measuring three-dimensional (3D) coordinate values of an environment, the method comprising:
moving a mobile scanning platform through an environment, the mobile scanning platform being configured to measure coordinates in the environment;
generating a point cloud from the measured coordinates; and
registering the point cloud, wherein the registering comprises:
triangulating a position of the mobile scanning platform based at least in part on data received from one or more radio antennas, the one or more radio antennas being associated with the mobile scanning platform;
adjusting an orientation or position of one or more measured points in the point cloud to align with a layout of the environment; and
correcting for accumulated error in the point cloud.
